Europäisches Patentamt

European Patent Office

Office européen des brevets

(11) Numéro de publication: **0 326 770**

**A1**

## (12) DEMANDE DE BREVET EUROPEEN

(21) Numéro de dépôt: 88403302.8

(22) Date de dépôt: 23.12.88

(51) Int. Cl.⁴: **G09B 29/00**

(30) Priorité: 31.12.87 FR 8718447

(43) Date de publication de la demande:
09.08.89 Bulletin 89/32

(84) Etats contractants désignés:
**BE DE ES GB IT LU NL**

(71) Demandeur: **Desjardins, Patrick Christian Roland**
**100 Avenue du Drap d'Or**
**F-77230 Dammartin-en-Goele(FR)**

(72) Inventeur: **Desjardins, Patrick Christian Roland**
**100 Avenue du Drap d'Or**
**F-77230 Dammartin-en-Goele(FR)**

(74) Mandataire: **Vander-Heym, Serge**
**CABINET R. VANDER-HEYM 172, Boulevard Voltaire**
**F-75011 Paris(FR)**

(54) **Panneau didactique.**

(57) Panneau didactique, caractérisé en ce qu'il est constitué par une pluralité de feuillets transparents (1,2,3) pouvant être superposés, chacun des feuillets comportant en impression les informations nécessaires à un thème donné. Chaque feuillet transparent comporte, en impression, des informations communes (4) et des informations spécifiques (5-6). Chaque feuillet est traité de façon à la rendre apte à recevoir des inscriptions effectuées à l'aide d'un instrument d'écriture du commerce et à permettre l'effaçage desdites inscriptions.

Fig.1 Fig.2 Fig.3 Fig.4

Xerox Copy Centre

La présente invention est relative à un panneau didactique.

Dans le domaine de l'enseignement de la géographie, par exemple, on utilise des cartes murales sur lesquelles sont confondus plusieurs thèmes.Ainsi, la même carte murale peut comporter les fleuves,les principales villes, le découpage en régions et en départements,le relief,etc.

Il est évident cependant que ces différentes thèmes sont étudiés séparément et que ce n'est qu'au fur et à mesure de l'étude du programme que ces différentes thèmes doivent être reliés.

D'ailleurs, les éditeurs de cartes murales destinées à l'enseignement ont été conscients de ce problème et ont réalisé des cartes spécifiques ( départment , relief , géologie , productions naturelles,etc.).

La multiplicité des thèmes étudiés a donc conduit à l'édition d'une pluralité de cartes qui,cependant, restent physiquement indépendantes les unes des autres, rendant très difficile la liaison des différents thèmes entre eux, surtout pour de jeunes enfants.

La présente invention, qui remédie à ces inconvénients, est remarquable en ce que le panneau didactique est constitué par une pluralité de feuillets transparents pouvant être superposés, chaque feuillet comportant, en impression, les éléments d'un thème.

De préférence, chaque feuillet transparent est imprimé de façon à présenter des informations communes à l'ensemble des feuillets du panneau et des informations spécifiques au thème traité par le feuillet.

D'autres caractéristiques et avantages apparaîtront mieux par la description qui va suivre, faite en se référant au dessin annexé, à titre d'exemple indicatif seulement,sur lequel :

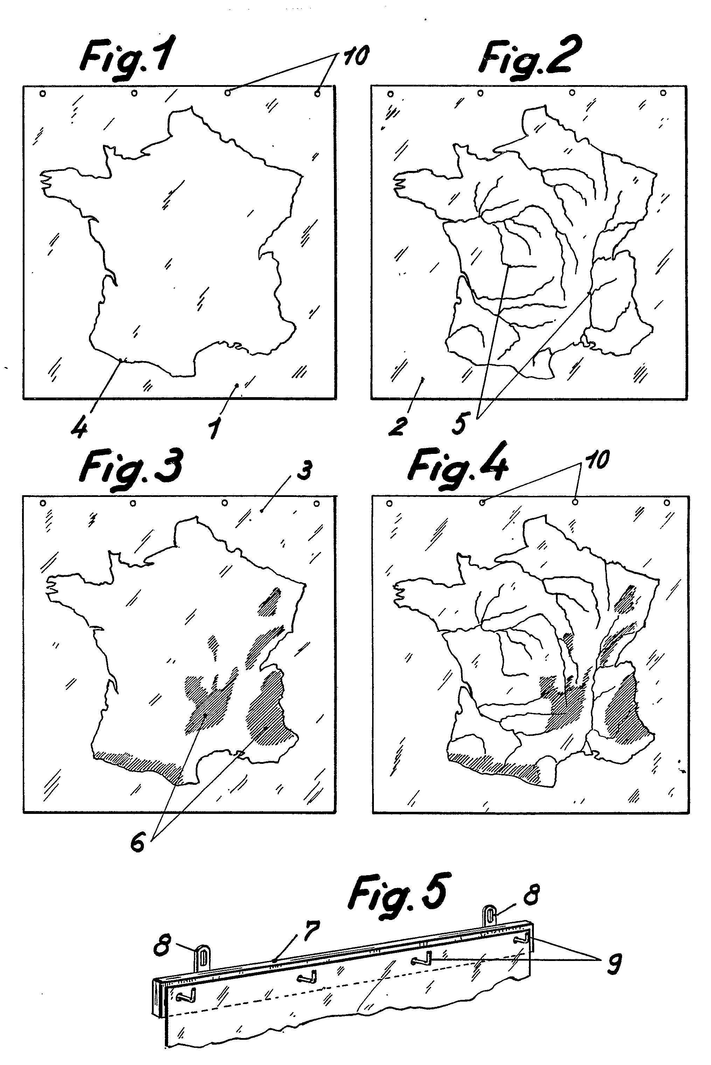

Les figures 1,2 et 3 montrent trois feuillets composant un panneau;

La figure 4 illustre l'aspect du panneau lorsque les trois feuillets sont superposés;

La figure 5 est une vue en perspective d'un organe permettant le maintien des feuillets.

En se reportant au dessin et selon un mode de réalisation,on voit que 1,2 et 3 sont des feuillets réalisés en une matière transparente sur chacun desquels sont imprimées des informations communes 4 et des informations spécifiques 5 et 6.

Dans l'exemple représenté, l'information commune 4 est constituée par le contour des frontières de la France, tandis que les informations spécifiques sont constituées, pour celles 5 du feuillet 2 par les fleuves et rivières et, pour celles 6 du feuillet 3, par les principaux massifs montagneux.

S'il s'agissait d'un panneau didactique destiné à l'étude du corps humain, les informations communes seraient constituées par le contour stylisé du corps humain par exemple, tandis que les informations spécifiques pourraient être le squelette, les vaisseaux sanguins, les muscles,etc.

Selon un autre caractéristique de l'invention, chaque feuillet du panneau est traité de façon à le rendre apte à recevoir des inscriptions faites à l'aide de crayons feutres du commerce et à permettre l'effaçage.

Des moyens sont prévus pour permettre la superposition en coincidence des feuillets 1 à 3.

Selon un mode de réalisation, on utilise une réglette 7 présentant des pattes de fixation 8 murales, et des crochets 9 dont l'écartement correspond très exactement à celui des perforations 10 prévues le long du bord supérieur des feuillets transparents 1,2 et 3.

Bien entendu, la présente invention ne se limite pas au mode de réalisation décrit et représenté mais s'étend, au contraire, à toutes variantes de formes et dimensions.

C'est ainsi,entre autres, que le même panneau peut comporter un nombre quelconque de feuillets.

C'est ainsi, encore, que le premier feuillet peut être totalement blanc ou de couleur claire et être utilisé comme un fond et,ou,comme un tableau usuel.

On peut concevoir aussi que le premier feuillet comporte un quadrillage,éventuellement repéré. Dans le cas d'un panneau géographique, ce quadrillage peut indiquer les longitudes et les latitudes.

## Revendications

1-Panneau didactique du genre de ceux constitués par une pluralité de feuillets transparents pouvant être superposés et comportant, en impression,les informations nécessaires à un thème donné,caractérisé en ce que chaque feuillet (1,2,3) est traité de façon à le rendre apte à recevoir des inscriptions faites à l'aide de crayons feutres du commerce et à permettre l'effaçage.

2-Panneau didactique selon la revendication 1, caractérisé en ce que le premier feuillet est blanc, ou de couleur claire,et constitue le fond du panneau.

3-Panneau didactique, selon la revendication 2,caractérisé en ce que le premier feuillet comporte des impressions.

EP 0 326 770 A1

Fig.1 10

Fig.2

4    1

2    5

Fig.3    3

Fig.4    10

6

Fig.5    8

8    7

8    9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 141 123  (M. GOUDON) <br> * document en entier * | 1 | G 09 B  29/00 |
| A | | 3 | |
| | --- | | |
| X | FR-A-1 111 469  (H. PLATZ) <br> * document en entier * | 1 | |
| A | | 3 | |
| | --- | | |
| X | DE-A-2 324 727  (H.-J. ANSCHUETZ) <br> * page 1, ligne 6 - page 2, ligne 20; revendications 1-9; figures 2,4 * | 1-3 | |

**DOMAINES TECHNIQUES RECHERCHES (Int. Cl.4)**

G 09 B  29/00

*Le présent rapport a été établi pour toutes les revendications*

| Lieu de la recherche | Date d'achèvement de la recherche | Examinateur |
|---|---|---|
| BERLIN | 05-04-1989 | BEITNER M.J.J.B. |

EPO FORM 1503 03.82 (P0402)